Europäisches Patentamt

European Patent Office

Office européen des brevets

(19)

(11) Numéro de publication: **0 001 371**

**B1**

(12)

# FASCICULE DE BREVET EUROPEEN

(21) Numéro de dépôt: **78420008.1**

(22) Date de dépôt: **20.09.78**

(51) Int. Cl.³: **C 07 C 85/11,**
**C 07 C 85/24,**
**C 07 C 87/60,**
**B 01 J 23/50, B 01 J 23/72**

(54) Procédé de déshalogénation de composés aromatiques halogenes

(30) Priorité: **22.09.77 FR 7729400**

(43) Date de publication de la demande:
**04.04.79 Bulletin 79/07**

(45) Mention de la délivrance du brevet:
**01.10.80 Bulletin 80/20**

(84) Etats contractants désignés:
**BE CH DE FR GB LU NL SE**

(56) Documents cités:
**FR - A - 2 162 782**
**FR - A - 2 213 260**

(73) Titulaire: **RHONE-POULENC AGROCHIMIE**
**14—20, rue Pierre Baizet**
**F - 69009 Lyon (FR)**

(72) Inventeur: **Biola, Georges**
**30, rue Montferrat**
**F - 69500 Bron (FR)**
**Font, Jean**
**45, rue Pierre Bouvier**
**F - 69270 Fontaines s. Saône (FR)**
**Daumas, Jean-Claude**
**32, allée de Persépolis**
**F - 91400 Orsay (FR)**

(74) Mandataire: **Chretien, François et. al.**
**PHILAGRO BP 9163—09**
**F - 69263 Lyon Cédex 1 (FR)**

Courier Press, Leamington Spa, England.

## Procédé de déshalogénation de composés aromatiques halogènes

La présente invention concerne un procédé de fabrication de composés aromatiques halogénés par déshalogénation de dérivés correspondants portant un plus grand nombre d'atomes d'halogène. Elle a plus spécialement pour objet la fabrication de chloro-anilines métasubstituées, notamment la dichloro-3,5 aniline à partir d'anilines plus fortement chlorées.

On sait que la dichloro-3,5 aniline peut être obtenue, d'après la demande française 2162782, par un procédé de déshalogénation de composés aromatiques halogénés conduisant à l'obtention préférentielle de dérivés portant un nombre inférieur d'atomes d'halogènes dont l'un au moins est situé en position méta par rapport à un groupement fonctionnel, en phase vapeur, par action de l'hydrogène et en présence de catalyseurs en lit fixe ou fluidisé, qui est caractérise en ce que l'on met en contact des amines aromatiques polyhalogénées ou les dérivés nitrés correspondants avec de l'hydrogène à une température comprise entre 280 et 420°C, en présence d'un catalyseur d'hydrogénation à action ménagée, tel qu'un sel (chlorure, oxyde, nitrate, sulfate ou chromite) de cuivre ou d'argent.

Ce procédé se caractérise par sa sélectivité améliorée en dérivés aromatiques substitués en position méta. Cependant, l'expérience montre qu'il présente l'inconvénient majeur, notamment lorsqu'on met en oeuvre les composés du cuivre sur support d'alumine, de nécessiter de fréquentes régénérations du catalyseur par suite de la formation in situ de dépôts carbonés dûs à la dégradation complète d'une partie des réactifs.

La demanderesse a maintenant trouvé que ces dépôts carbonés peuvent être considérablement réduits par modification d'au moins une partie du support comprenant sa surface. Pour plus de commodité, cette modification sera désignée dans la suite "superficielle", étant entendu que cette désignation n'est pas limitative, l'essentiel étant que lors de la modification au moins la surface soit concernée.

La présente invention concerne donc un procédé de déshalogénation de composés aromatiques halogénés, aminés ou nitrés, conduisant à l'obtention préférentielle de dérivés portant un nombre inférieur d'atomes d'halogène dont l'un au moins est substitué en position méta par rapport au groupe amino ou nitro, en phase vapeur, par l'action, à une température comprise entre 280 et 420°C, de l'hydrogène en présence d'un catalyseur d'hydrogénation à action ménagée déposé sur un support à base d'alumine, caractérisé en ce qu'on utilise un support modifié au moins en surface par incorporation d'un métal sous forme d'un sel ou d'un oxyde, cette incorporation comprenant un traitement du support avec ledit sel ou oxyde métallique suivi d'une calcination à une température allant d'environ 500 à 1000°C.

Ce support ainsi modifié contient de 0,2 à 30% et de préférence de 5 à 20% en poids de métal incorporé par rapport au support initial.

Le support utilisable selon l'invention se présente habituellement sous la forme de grains de silice de granulométrie fine, c'est-à-dire de diamètre moyen allant d'environ 60 à 200, et de préférence d'environ 80 à 100 microns, dans le cas des lits fluidisés ou de granulométrie plus grosse, de l'ordre de quelques milimètres, dans le cas de lits fixes. La surface spécifique des grains est généralement comprise entre environ 20 et 500 $m^2/g$ et de préférence 60 à 300 $m^2/g$.

La première phase de l'incorporation du métal dans le support peut être effectuée selon plusieurs variantes.

La première consiste à imprégner le support avec une solution d'un sel métallique alcalin, alcalino-terreux ou de métal à plusieurs valences. Cette technique est particulièrement appropriée pour les supports à base d'alumine, celleci se combinant avec le sel d'imprégnation après calcination, pour donner soit des aluminates, soit des solutions solides alumine/oxyde métallique. outre les sels des métaux alcalins et alcalino-terreux, on peut utiliser avantagevsement ceux de fer, nickel, cobalt, zinc et cuivre ainsi que chrome, molybdène ou tungstène. Selon cette technique, de bons résultats ont été obtenus avec des sels de magnésium, de cuivre et de l'oxyde de chrome.

La seconde variante consiste à incorporer le métal suivant une technique sol-gel, par mélange d'un sel du métal et d'un sel d'aluminium, gélification, par neutralisation avec de l'hexaméthylène tétramine, du composé résultant avec dispersion en fines gouttelettes dans un hydrocarbure chaud, ces dernières prenant une forme sphéroïdales.

On entend, en particulier, par "sol-d'alumine", tout sel basique d'aluminium de formule générale $Al_2(OH)_{6-a}X_a$ dans laquelle X est au moins un des anions choisis parmi le groupe constitué par les halogénures $NO_3^-$, $ClO_4^-$; on préfèrera les hydrochlorures d'aluminium. Ces sels basiques d'aluminium peuvent être obtenus notamment, par digestion d'aluminium métallique dans l'acide HX ou dans une solution de $AlX_3$, par électrolyse d'une solution de sel d'aluminium, par neutralisation d'un sel d'aluminium plus ou moins basique par une base et élimination du sel formé, par réaction d'un sel d'aluminium, par neutralisation d'un sel d'aluminium plus ou moins basique par une base et élimination du sel formé, par réaction d'un sel d'aluminium avec un donneur d'électrons comme l'oxyde d'éthylène et élimination du produit de réaction, par mise en contact d'un sel d'aluminium avec un solvant non miscible à l'eau contenant une amine aliphatique à longe chaîne puis récupération de la phase aqueuse contenant le sel basique et concentration, par peptisation d'un gel d'alumine fraîchement précipité, par attaque d'un oxyde ou hydroxyde d'aluminium par l'acide HX.

La solution de sol d'alumine contient de 5 à 35% en poids d'alumine comptée en $Al_2O_3$ et présente un rapport atomique Al/X compris entre 1,33 et 2,67. Selon une mise en oeuvre préférée la concentration d'alumine dans la solution du sol de départ est comprise entre 15 et 30% en poids et le rapport atomique Al/X est comprise entre 1,60 et 2,20.

La concentration de la solution d'hexaméthylènetétramine utilisée selon l'invention est comprise entre 15 et 45% en poids, selon une mise en oeuvre préférée, elle est d'environ 30 à 45% en poids.

On mélange intimément la solution d'hexaméthylènetétramine avec la solution de sol d'alumine à une température inférieure à la température de gélification du mélange. Ce mélange est effectué dans des rapports en volumes solutions d'hexaméthylènetétramine-sol d'alumine compris entre 3:1 et 1:20 environ, la valeur de ce rapport dépendant notamment de la concentration en alumine et de la valeur du rapport atomique Al/X du sol de départ, il peut être avantageux d'effectuer le mélange en proportions telles que ces rapports en volumes soient compris entre 1:1 et 1:6.

Ensuite on disperse sous forme de gouttelettes, le mélange résultant dans un liquide très peu miscible à l'eau. On peut utiliser comme liquide de formage, tout liquide ou tout mélange de liquides très peu miscibles à l'eau d'une densité inférieure à celle des gouttelettes. On peut citer, à titre d'exemple de liquides très peu miscibles à l'eau:le pétrole, le kérosène, le dodécylbenzène, les alcools et les solvants organiques en général.

Les gouttelettes de mélange se gélifient du fait de la neutralisation des anions contenus dans le sol de départ par l'ammoniaque libérée lors de l'hydrolyse de l'hexaméthylène-tétramine. Afin d'obtenir, selon l'invention, une gélification convenable des gouttelettes, il est avantageux que la concentration en aluminium du mélange soit comprise entre 6 et 12% en poids, et préférentiellement entre 7 et 11%, que, de plus, le rapport molaire héxaméthylène-tétramine/chlore soit supérieur à 0,17 et de préférence compris entre 0,2 et 0,6, que la température du liquide de formage soit comprise entre 50 et 150°C, et de préférence entre 85 et 95°C, et que le temps de séjour dans le milieu de formage soit compris entre 1 seconde et 2 heures environ.

Après cette étape de formage, on opère le vieillissement des billes obtenues dans le même type de milieu très peu miscible à l'eau que le milieu de formage. Ce vieillissement est opéré à une température inférieure à 130°C et de préférence comprise entre 100 et 110°C et sous une pression supérieure à la pression atmosphérique et pour laquelle l'eau contenue dans les sphères de gel se trouve maintenue à l'état liquide. Il peut être avantageux d'opérer ce vieillissement à une température comprise entre 120 et 150°C et pendant une durée de 10 à 30 heures et de préférence de 16 à 24 heures.

Cette technique convient particulièrement pour l'incorporation d'oxyde de chrome dans des support d'alumine. On obtient ainsi, après calcination, des microbilles qui possèdent, par rapport au support d'alumine dans lequel on a incorporé l'oxyde de chrome selon la première variante, c'est-à-dire par imprégnation, l'avantage d'une présentation plus homogène et une résistance mécanique supérieure avec, pour conséquence, une augmentation de la performance et de la durabilité de l'ensemble catalyseur.

Bien entendu, que le traitement du support ait été effectué selon la première ou la seconde variante, le support traité est ensuite calciné à une température allant de 500 à 1000°C et de préférence de 800 à 1000°C.

Puis le support ainsi modifié est imprégné d'une manière en soi connue avec un sel (chlorure, sulfate, nitrate, chromite) ou oxyde d'un métal à propriétés de catalyseur d'hydrogénation à action ménagée, comme par exemple l'argent et de préférence le cuivre, mais d'autres catalyseurs ou combinaisons catalytiques d'hydrogénation d'efficacité comparable au sel des métaux précités sont également envisageables.

Les autres conditions générales de réalisation du procédé selon l'invention sont les suivantes:

Les matières premières sont évidemment choisies en fonction des produits finals recherchés, en ce sens que l'on part d'un composé aromatique portant un ou deux atomes d'halogène en position méta, si l'on veut fabriquer préférentiellement un produit présentant ce(s) substituant(s). La présence d'au moins un atome d'halogène en position ortho est nécessaire, si l'on vise la fabrication d'amines méta et ortho substituées, bien que, suivant une caractéristique de l'invention, on puisse aussi, à volonté, éliminer totalement les substituants ortho. Le choix de la matière de départ n'a pas d'autres exigences, c'est-à-dire que l'on peut, compte-tenu de ces préalables, avoir recours aussi bien à des dérivés dont le noyau est totalement que partiellement substitué par des atomes d'halogènes.

L'un des avantages du procédé réside d'ailleurs dans le fait qu'il permet de valoriser certains composés polyhalogénés, notamment polychlorés, qui n'ont pas en eux-mêmes une application extensive:c'est ainsi, par exemple, que certains isomères des tri- et tétrachlor-benzènes peu utilisés, et d'un faible prix de revient, peuvent être convertis en tri et tétrachloranilines qui permettent d'abboutir, suivant le procédé selon l'invention, à un composé tel que la dichloro-3,5 aniline; celle-ci est alors fabriquée dans des conditions économiquement beaucoup plus avantageuses que lorsqu'on la prépare suivant la méthode connue jusqu'à ce jour. Un autre exemple intéressant concerne certaines dichloranilines dont un des chlores est en position méta notamment la dichloro-3 aniline. Des cas analogues de valorisation de composés aromatiques polybromés peuvent également se présenter. Enfin il n'est pas nécessaire que le produit de départ soit pur:on peut mettre en oeuvre dans le procédé de l'invention, une charge comprenant une proportion majeure du composé choisi pour la réaction, à côté de polyhalogénoamines différemment halogénées ou même de sous-produits. On peut aussi utiliser des mélanges de deux composés ou plus destinés à la réaction.

La température est un facteur assez important et doit être maintenue dans la gamme la gamme de 280 à 420°C, si l'on veut opérer en phase gazeuse des dérivés aromatiques halogénés de départ et obtenir la sélectivité recherchée et un taux de conversion convenable sans formation sensible de produits indésirables, notamment par dégradation, cracking. A l'intérieur de ces limites, le domaine de température plus spécialement adapté est fonction de diverses variables. Tout d'abord les catalyseurs à base d'argent requièrent généralement une gamme relativement élevée, de l'ordre de 250 à 420°C, alors que ceux à base de cuivre admettent aussi bien le domaine inférieur de température, dans les limites de l'invention. On peut aussi jouer sur ce facteur pour modifier les proportions relatives de produits finis. C'est ainsi que si l'on augmenter la quantité relative d'halogéno-3 et/ou dihalogéno-3,5 anilines formées, par rapport à la trihalogéno-2,3,5 aniline, il est préférable d'adopter une température un peu plus forte que si l'on ne recherche pas cet effet. Ce même décalage peut se retrouver lorsqu'on part d'une matière à degré d'halogénation plus ou moins grand. La réaction étant fortement exothermique, il est recommandé d'évacuer les calories afin de maintenir le milieu réactionnel à une température sensiblement constante; pour cela, on a recours aux moyens classiques tels que refroidissement à l'aide de fluides caloporteurs, ou autres. A cet égard, l'application de la technique du lit fluidisé est intéressante car elle évite les surchauffes locales.

La quantité d'hydrogène à mettre en jeu dans le procédé de l'invention ne constitue pas un facteur déterminant et peut représenter, à volonté, la proportion stoéchiométrique, par rapport au nombre d'atomes d'halogènes à éliminer, ou de préférence un faible ou large excès. La réaction se déroule facilement, est très rapide, au plus de l'ordre de quelques seconders ou même fractions de seconde, et s'accommode parfaitement de la pression atmosphérique, bien que l'application d'une pression inférieure ou supérieure ne soit évidemment pas exclue.

Suivant un trait facultatif mais particulièrement avantageux du procédé de l'invention, on prépare in situ les amines aromatiques polyhalogénées de départ en introduisant dans la zone de déshalogénation les composés aromatiques nitrés polyhalogénés servant à l'obtention desdites amines:la conversion des dérivés nitrés en anilines est très élevée, voire même quantitative. Ainsi on peut fabriquer en un seul stade les amines recherchées, relativement peu halogénées, directement à partir de composés nitrés porteurs d'un plus grand nombre d'atomes d'halogènes. Un exemple d'un tel mode opératoire est, notamment, la fabrication de dichloro-3,5 aniline au départ de nitro-1 tétrachloro-2,3,4,5 ou nitro-1 tétrachloro-2,3,5,6 benzène ou de pentachloronitro-benzène.

En pratique, un moyen commode de mettre en oeuvre le procédé selon l'invention consiste à introduire de l'hydrogène et la matière première halogénée, préalablement vaporisée, par le bas d'une zone réactionnelle contenant un Lit catalytique constitué de particules de support sur lequel est déposé le catalyseur, et portée à la température de réaction, qui est maintenue sensiblement constante. On peut, en réglant convenablement le débit d'introduction des gaz, maintenir le lit catalytique à l'état fluidisé. Il est avantageux d'éliminer rapidement les produits formés, de la zone de déshalogénation afin d'éviter les réactions secondaire et les phénomènes de dégradation. A la sortie du réacteur, l'effluent gazeux contient le gaz halogéno-hydrique formé au cours de la réaction, généralement de l'hydrogène et de la matiére première non transformée, et les composés aromatiques résultant de la déshalogénation, dont la proportion majeure est représentée par des dérivés porteurs d'halogène en position méta, tandis que le reste comporte divers isomères halogénés et, le cas échéant, une faible proportion de produit non halogéné et d'impuretés diverses; ces amines sont présentes au moins partiellement à l'état d'halogéno-hydrates. On traite ce mélange, en vue de la séparation de ses constituants, par application de techniques diverses. Un moyen avantageux consiste à mettre tout d'abord l'effluent gazeux issu de la réaction au contact d'un liquide ou d'une vapeur, tel qu'un alcool aliphatique comme le méthanol, un hydrocarbure comme le benzène, ou l'eau, se trouvant à une température nettement plus basse que ledit effluent, par exemple à 100°C ou moins selon de composé mis en jeu, afin de condenser rapidement les anilines et/ou leurs halogéno-hydrates. On sépare ensuite les divers composés aminés par exemple par cristallisation. Les amines peuvent être récupérées à l'état libre si nécessaire, par l'application des méthodes classiques telles que traitement à l'aide d'un composé basique comme la soude, la potasse, un carbonate alcalin, etc. On peut aussi libérer d'abord les amines, puis les séparer par cristallisation ou distillation. Si l'on utilise l'eau dans cette technique, on met en outre à profit le fait que certains halogéno-hydrates d'amines sont insolubles en milieu aqueux, alors que d'autres sont solubles. C'est ainsi, par exemple, que les chlorhydrates de tri- et tétrachloranilines sont pratiquement insolubles, alors que ceux des mono et dichloranilines sont solubles. On recueille alors une solution aqueuse dans laquelle sont dissous le gaz halogéno-hydrique et certains halogénohydrates d'anilines et qui contient en suspension ou sous forme de précipités, les halogénohydrates insolubles. Par une simple opération physique ou mécanique, telle que filtration ou centrifugation, on obtient alors une séparation entre produits solubles ou insolubles. On traite ensuite séparément la phase solide et la soluble comme indiqué plus haut, pour isoler les composés aminés.

Le cas échéant, l'amine de départ non transformée ou des halogénoamines issues de la réaction, mais non spécialement recherchées -par exemple, les dérivés trihalogénés dans le cas d'une fabrication visant essentiellement des dérivés dihalogénés- peuvent avantageusement être recyclés en tout ou en partie, dans la zone réactionnelle, où elles sont à nouveau soumises au procédé de déshalogénation selon l'invention. Le recyclage peut être effectué soit avec les halogénohydrates, soit avec les amines libres.

Il est clair que l'on ne sort pas du cadre de l'invention en adoptant un mode de mise en oeuvre pratique du procédé, différent de celui exposé plus haut ou en effectuant le traitement de l'effluent issu de la déshalogénation par tout autre moyen que ceux qui ont été décrits ci-dessus, à titre indicatif.

Les exemples ci-après, donnés à titre non limitatif, font ressortir les performances et avantages du procédé selon la présente invention.

Dans ces exemples les abréviations utilisées sont:

TTCNB: tétrachlornitrobenzène
TTCA: tétrachloroaniline
TCA: trichloroaniline
DCA: dichloroaniline
CA: chloroaniline
PCB: pentachlorobenzene
TTCB: tétrachlorobenzène
A: aniline

### EXEMPLE 1

Préparation de deux catalyseurs pour lit fluidisé dont le support est obtenu selon la première variante.

On imprègne 100 g de grains d'alumine flash (groseur 20 à 100 microns) ayant une surface spécifique de 300 m²/g, à l'aide d'une solution aqueuse de nitrate de magnésium $Mg(NO_3)_2.6H_2O$, de manière à obtenir une teneur finale de 5% en poids de magnésium par rapport au catalyseur terminé (soit environ 5,25% en poids par rapport au support). Le support imprégné est ensuite calciné à 950°C pendant 3 heures.

On opère de la même manière sur un autre échantillon d'alumine similaire au premier, mais en effectuant l'imprégnation avec une solution aqueuse d'oxyde de chrome ($CrO_3$) de façon à obtenir une teneur finale en chrome de 10% en poids (soit environ 11,1% en poids par rapport au support). Le support imprégné est ensuite calciné dans les mêmes conditions que précédemment.

A partir de chacun de ces supports modifiés, on prépare ensuite, selon une technique classique, le catalyseur par imprégnation du support modifié avec une solution de chlorure cuivrique de manière à obtenir une teneur finale de cuivre de 6% en poids par rapport à l'ensemble "support-phase active" (soit environ 6,4% par rapport au support modifié ou non). Le support imprégné est ensuite séché à 200°C.

Les catalyseurs ainsi obtenus sont désignés ci-aprè respectivement:

catalyseur au magnésium: 1
catalyseur au chrome: 2

### EXEMPLE 2

Préparation d'un catalyseur pour lit fluidisé dont le support est obtenu selon la seconde variante.

On prépare une solution d'oxychlorure de chrome III par action de 100 cm³ d'HCl à 36% (d = 1,18) sur 192,3 g d $CrO_3$ en présence d'un réducteur et mélange avec une solution contenant 1243,7 g d'oxychlorure d'aluminium $Al_2(OH_5Cl)$. Le mélange est précipité à froid par addition à une solution aqueuse d'hexaméthylènetétramine. Le produits résultant est alors dispersé en fines gouttelettes dans du pétrole à 90°C, à l'aide d'une pompe et d'un gicleur de diamètre approprié.

En faisant varier le débit de la pompe et le diamètre du gicleur, on peut régler à volonté la répartition granulométrique des gouttelettes formées. Celles-ci se coagulent dans le pétrole chaud en prenant la forme sphérique.

Après chauffage pendant 21 heures à 100°C dans le bain de pétrole, les microbilles sont séparées, lavées à l'eau, séchées 12 heures à 100°C puis calcinée 4 heures à 900°C pour donner lieu à la formation d'une solution solide "oxyde de chrome-alumine".

Ce support est ensuite imprégné à l'aide d'une solution de chlorure de cuivre par une technique classique (drageoir) puis séché à 200°C.

Le catalyseur obtenu contenant 10% de chrome et 6% de cuivre sera désigné par 3.

EXEMPLE 3

Par le bas d'un réacteur tubulaire garni de 100 g de grains de catalyseur à support modifié selon la première variante de l'invention (cf. par ex. grosseur:20 à 100 microns), on introduit en une heure, 100 g de tétrachloro 2,3,4,5 nitrobenzène vaporisé et 75 litres d'hydrogène. La température dans le réacteur, maintenue sensiblement constante grâce à un refroidissement par un fluide caloporteur est de l'ordre de 310°C.

Le temps de contact du mélange gazeux avec le catalyseur est de 3 secondes. L'ensemble de l'opération dure environ 4 heures. Du sommet de la zone de déshalogénation, l'effluent réactionnel passe dans une colonne de lavage à l'eau; celle-ci entraîne les anilines et l'HCl tandis que l'hydrogène excédentaire est rejeté à l'atmosphere. On neutralise alors à la soude la masse récupérée au bas de la colonne de lavage afin de libérer la partie organique qui est analysée par chromatographie en phase vapeur et chromatographie sur couche mince.

Les résultats de cette analyse figurent dans le tableau suivant sous forme des teneurs des divers effluents exprimés en pourcentage molaire.

A titre de comparaison, les résultats sont donnés pour une opération dans le mêmes conditions avec un catalyseur à support non modifié R tel que décrit dans la demande française 2 162 782.

| catalyseur<br><br>Effluent | classique<br><br>R | selon l'invention | |
|---|---|---|---|
| | | 1 | 2 |
| 2, 3, 4, 5 TTCNB | 1,0 | 2,3 | 0,2 |
| 2, 3, 4, 5 TTCA | 12,2 | 22,5 | 21,7 |
| 3, 4, 5     TCA | 1,0 | 3,4 | 2,0 |
| 2, 3, 4     TCA | | 1,3 | |
| 2, 3, 5     TCA | 36,2 | 33,3 | 35,7 |
| 3, 4     DCA | | 1,1 | |
| 3, 5     DCA | 42,3 | 33,1 | 32,0 |
| 3     CA | 7,3 | 2,7 | 8,4 |
| carbone (dépôt sur catalyseur % | 9,0 | 5,1 | 3,2 |

Ce tableau montre clairement l'importante réduction du taux de carbone déposé sur le catalyseur avec un support modifié selon l'invention, réduction qui permet d'allonger considérablement la durée de ce dernier. Le rendement en dichloroaniline-3,5 est inférieur à celui obtenu avec le catalyseur à support classique, mais ceci n'est qu'un inconvénient mineur puisque, en fonctionnement industriel, les gaz non transformés peuvent être recyclés et que le coût de régénération du catalyseur devient moins élevé.

EXEMPLE 4

On opère comme à l'exemple précédent en utilisant le catalyseur à support modifié selon la seconde variante de l'invention (catalyseur n° 3) en comparaison avec un catalyseur à support non modifié R tel que décrit précédemment. Les résultats obtenus sont compris dans le tableau suivant:

| catalyseurs<br><br>Effluents | R | 2 | 3 |
|---|---|---|---|
| 2, 3, 4, 5  T T C N B | 0,3 | 0,1 | 0,2 |
| 2, 3, 4, 5  T T C A | 8,2 | 20,2 | 18,3 |
| 3, 4, 5   T C A | 1,0 | 1,6 | 2,9 |
| 2, 3, 5   T C A | 30,4 | 29,4 | 30,6 |
| 3, 5    D C A | 37,3 | 32,0 | 32,5 |
| 2, 5    D C A | 2,2 | | |
| 3     C A | 2,7 | 5,6 | 5,5 |
|      P C B | 0,5 | | |
|      T T C B | 0,3 | | |
| C % sur catalyseur | 8,0 | 3,2 | 2,6 |
| % horaire de catalyseur attritionne dans un test comparatif (norme) | 8 | 6 | 2 |

Ce tableau montre clairement:

— la réduction des deux tiers, donc considérable, du dépôt de carbone sur le catalyseur apporté par le support modifié **3** (microbilles oxyde de chrome/alumine) par rapport au support non modifié.

— l'amélioration importante, dans la limitation de la dégradation du catalyseur par attrition en raison du brassage (par les gaz réactifs) du lit catalytique.

EXEMPLE 5

On opère comme à l'exemple 3 avec le catalyseur 2, si ce n'est que l'on introduit dans le réacteur un égal volume de dichloro-3,4 aniline vaporisée et de l'hydrogène dans un rapport molaire $H_2$/3,4-DCA égal à environ 5. La réaction est effectuée pendant 3 heures à 320°C avec un temps de séjour de 3 secondes.

Dans ces conditions, les résultats toujours exprimés en pourcentage molaire sont consignés dans le tableau suivant:

| EFFLUENTS | % MOLAIRE |
|---|---|
| 3, 4  D C A | 1,4 |
| 3, 5  D C A | 0,49 |
| 3   C A | 89,32 |
|    A | 8,7 |
| % sur le catalyseur | 3,83 |

Ce tableau montre clairement l'intérêt du procédé qui permet une transformation quasi complète de la dichloro-3,4 aniline en chloro-3 aniline.

## Revendications

1. Procédé de déshalogénation d'amines aromatiques halogénées conduisant à l'obtention préférentielle de dérivés portant un nombre inférieur d'atomes d'halogènes, dont l'un au moins est situé en position méta par rapport au groupe amino, en phase vapeur, par l'action à une température comprise entre 280 et 420°C, de l'hydrogène en présence d'un catalyseur métallique d'hydrogénation à action ménagée choisi dans le groupe comprenant le cuivre et l'argent et déposé sur un support à base d'alumine, caractérisé en ce qu'on utilise un support modifié au moins en surface, par incorporation d'un métal sous forme d'un sel ou d'un oxyde, cette incorporation comprenant un traitement du support avec ledit sel ou oxyde métallique suivi d'une calcination à une température allant environ de 500 à 1000°C.

2. Procédé selon la revendication 1), caractérisé en ce qu'on utilise support ainsi modifié contenant de 0,2 à 30% en poids de métal incorporé par rapport au support initial.

3. Procédé selon la revendication 2), caractérisé en ce qu'on utilise un support ainsi modifié contenant de 5 à 20% en poids de métal incorporé par rapport au support initial.

4. Procédé selon la revendication 1), caractérisé en ce qu'on incorpore un métal choisi dans le groupe comprenant les métaux alcalins et alcalino-terreux, le fer, nickel, cobalt, zinc et cuivre, ainsi que chrome, molybdène ou tungstène.

5. Procédé selon la revendication 4), caractérisé en ce que le métal incorporé dans le support est du magnésium.

6. Procédé selon l'une des revendications 1 à 5), caractérisé en ce que le traitement du support avec le sel ou oxyde métallique est effectué par imprégnation de l'alumine à l'aide dudit seul ou oxyde métallique.

7. Procédé selon l'une des revendication 1 á 5), caractérisé en ce que le traitement du support avec le sel ou oxyde métallique est effectué par mélange d'un sel d'aluminium et d'un sel métallique, mise en forme, gélification par neutralisation du composé résultant avec dispersion en fines gouttelettes sphéroïdales dans un hydrocarbure chaud.

8. Procédé selon l'une des revendications 1 à 7), caractérisé en ce que la calcination du support traité est effectuée à une température allant environ de 800 à 1000°C.

9. Procédé selon l'une des revendications 1 à 8), caractérisé en ce que les amines aromatiques polyhalogénées de départ sont des anilines di, tri ou tétrahalogénées sur le noyau phényle.

10. Procédé selon la revendication 9), caractérisé en ce que les atomes d'halogènes sont des atomes de chlore.

11. Procédé selon l'une des revendications 1 à 10), caractérisé en ce que l'on prépare in situ les amines aromatiques polyhalogénées de départ en introduisant dans la zone de déshalogénation les composés aromatiques nitrés polyhalogénés servant à l'obtention desdites amines.

## Patentansprüche

1. Verfahren zur Enthalogenierung von halogenierten aromatischen Aminen unter vorzugsweiser Erzielung von Derivaten mit einer geringeren Halogenatomanzahl, wovon wenigstens eines in Metastellung bezüglich der Aminogruppe substituiert ist, in der Dampfphase, durch Einwirkung von Wasserstoff bei einer Temperatur zwischen 280 und 420°C in Gegenwart eines metallischen Hydrierungskatalysators mit schonender Wirkung, der aus der Gruppe bestehend aus Kupfer und Silber ausgewählt und auf einem Trager aus Basisvon Aluminiumoxid abgelagert ist, dadurch gekennzeichnet, daß man einen Träger verwendet, der wenigstens an der Oberfläche modifiziert ist, durch Einverleibung eines Metalls in Form eines Salzes oder Oxids, wobei diese Einverleibung eine Behandlung des Trägers mit diesem Metallsalz oder Metalloxid und anschließende Kalzinierung bei einer Temperatur von etwa 500 bis 1000°C umfaßt.

2. Verfahren gemäß Anspruch 1, dadurch gekennzeichnet, daß man einen derart modifizierten Träger verwendet, der 0,2 bis 30 Gewichts-% einverleibtes Metall bezogen auf den ursprünglichen Träger enthält.

3. Verfahren gemäß Anspruch 2, dadurch gekennzeichnet, daß man einen derart modifizierten Träger verwendet, der 5 bis 20 Gewicht-% einverleibtes Metall bezogen auf den ursprünglichen Träger enthält.

4. Verfahren gemäß Anspruch 1, dadurch gekennzeichnet, daß man ein Metall einverleibt, ausgewählt aus der Gruppe bestehend aus den Alkali- und Erdalkalimetallen, Eisen, Nickel, Kobalt, Zink und Kupfer, sowie Chrom, Molybdän oder Wolfram.

5. Verfahren gemäß Anspruch 4, dadurch gekennzeichnet, daß das in den Träger einverleibte Metall Magnesium ist.

6. Verfahren nach einem der Ansprüche 1 bis 5, dadurch gekennzeichnet, daß die Behandlung des Trägers mit dem Metallsalz oder Metalloxid durch Imprägnieren des Aluminiumoxids mit diesem Metallsalz oder Metalloxid bewirkt wird.

7. Verfahren nach einem der Ansprüche 1 bis 5, dadurch gekennzeichnet, daß die Behandlung des Trägers mit dem Metallsalz oder Metalloxid bewirkt wird durch Vermischen eines Aluminiumsalzes mit einem Metallsalz, Gestaltung Gelierung durch Neutralisation der enstandenen Verbindung unter Dispergieren in einem heißen Kohlenwasserstoff zu feinen sphäriodalen Tröpfchen.

8. Verfahren gemäß einem der Ansprüche 1 bis 7, dadurch gekennzeichnet, daß die Kalzinierung des behandelten Trägers bei einer Temperatur von etwa 800 bis 1000°C bewirkt wird.

9. Verfahren gemäß einem der Ansprüche 1 bis 8, dadurch gekennzeichnet, daß die polyhalogenierten aromatischen Ausgangsamine Aniline sind, die am Phenylring di-, trioder tetrahalogeniert sind.

10. Verfahren gemäß Anspruch 9, dadurch gekennzeichnet, daß die Halogenatome Chloratome sind.

11. Verfahren gemäß den Ansprüchen 1 bis 10, dadurch gekennzeichnet, daß man die polyhalogenierten aromatischen Ausgangsamine in situ herstellt, indem man die polyhalogenierten nitrierten aromatischen Verbindungen, welche zur Erzeilung dieser Amine dienen, in die Enthalogenierungszone einführt.

## Claims

1. Process for the dehalogenation of halogen-containing aromatic amines, which leads to the preferential production of derivatives carrying a smaller number of halogen atoms, at least one of which is located in the *meta*-position relative to the amino group, in the vapour phase and at a temperature between 280° and 420°C by the action of hydrogen in the presence of a metallic controlled-action hydrogenation catalyst selected from the group comprising copper and silver and deposited on an alumina-based support, characterised in that the support used is modified, at least on the surface, by the incorporation of a metal in the form of a salt or an oxide, this incorporation consisting in treating the support with the said metal salt or metal oxide and then carrying out a calcination at a temperature ranging from about 500° to 1000°C.

2. Process according to claim 1 in which the alumina-based support so modified contains from 0.2 to 30% by weight of incorporated metal relative to the initial support.

3. Process according to claim 2 in which the alumina-based support so modified contains from 5 to 20% by weight of incorporated metal relative to the initial support.

4. Process according to claim 1, in which the metal incorporated in the alumina-based support is selected from the alkali and alkaline earth metals, iron, nickel, cobalt, zinc, copper, chromium, molybdenum and tungsten.

5. Process according to claim 4 in which the metal incorporated in the support is magnesium.

6. Process according to any one of claims 1 to 5 in which the support is treated with the metal salt or metal oxide by impregnating alumina using the said metal salt or metal oxide.

7. Process according to any one of claims 1 to 5 in which the support is treated with the metal salt or metal oxide by mixing an aluminium salt with a metal salt,

shaping the mixture and gelling it by neutralising the resulting compound, and dispersing the gel as fine spherical droplets in a hot hydrocarbon.

8. Process according to any one of claims 1 to 7 in which the treated alumina-based support is calcined at a temperature ranging from about 800° to 1000°C.

9. Process according to any one of claims 1 to 8 in which the initial aromatic amines are anilines containing two, three or four halogen atoms on the phenyl nucleus.

10. Process according to claim 9 in which the halogen atoms are chlorine atoms.

11. Process according to any one of claims 1 to 10 in which the initial aromatic amines, containing several halogen atoms, are prepared *in situ* by introducing into the dehalogenation zone the corresponding aromatic nitro compounds, containing several halogen atoms, which are used to to obtain the said amines.